# EUROPÄISCHE PATENTSCHRIFT

(11) **EP 1 749 154 B1**
(45) Veröffentlichungstag und Bekanntmachung des Hinweises auf die Patenterteilung: **31.12.2008**
(21) Anmeldenummer: 05757026.9
(22) Anmeldetag: 21.05.2005
(51) Int. Cl.: F16C 19/38, F16C 19/54, F16C 33/46, F16C 33/80

(54) **ABGEDICHTETES VIERREIHIGES KEGELROLLENLAGER FÜR STÜTZ-UND ARBEITSWALZENLAGERUNGEN AN WALZGERÜSTEN**
SEALED FOUR-ROW BALL BEARING FOR SUPPORT AND WORKING ROLLER BEARINGS ON ROLLER STANDS
PALIER A ROULEAUX CONIQUES ETANCHE EN QUATRE RANGEES POUR SUPPORTS DE CYLINDRES DE TRAVAIL ET D'APPUI SUR DES CAGES DE LAMINOIR

(30) Priorität: 26.05.2004 DE 102004025796
(43) Veröffentlichungstag der Anmeldung: 07.02.2007
(73) Patentinhaber: Schaeffler KG, 91074 Herzogenaurach (DE)
(72) Erfinder: SCHERPF, Adolf, 97478 Knetzgau-Unterschwappach (DE)
(86) Internationale Anmeldenummer: PCT/DE2005/000932
(87) Internationale Veröffentlichungsnummer: WO 2005/116467

(56) Entgegenhaltungen:
- DE-A1- 19 947 202
- GB-A- 1 001 218
- US-A- 4 527 915
- US-A- 4 699 529
- US-A- 5 498 085

## Beschreibung

### Gebiet der Erfindung

Die Erfindung betrifft ein abgedichtetes Wälzlager nach den oberbegriffsbildenden Merkmalen des Anspruchs 1, und sie ist insbesondere vorteilhaft an abgedichteten vierreihigen Kegelrollenlagern für Stütz- und Arbeitswalzenlagerungen an Kalt- und Warmwalzgerüsten realisierbar.

### Hintergrund der Erfindung

Dem Fachmann in der Wälzlagertechnik ist es allgemein bekannt, dass sich die Lebensdauer eines Wälzlagers durch eindringende Flüssigkeiten und Verschmutzungen erheblich verringert. Solche Flüssigkeiten und Verschmutzungen dringen zumeist dann in das Wälzlager ein, wenn die Montage des Wälzlagers in verschmutzten Umgebungen erfolgt und vor allem dann, wenn die Wälzlager während des Betriebes Schmutz, Metallspänen und Kühlflüssigkeiten od. dgl. ausgesetzt sind. Insbesondere beim Einsatz von Wälzlagern für die Lagerung von Stütz- und Arbeitswalzen an Walzgerüsten sind diese in hohem Maße verschiedensten Verunreinigungen ausgesetzt, so dass zum Erreichen der vorgesehenen Lagerlebensdauer hohe Anforderungen an die Wartung der Wälzlager gestellt werden. Eine Maßnahme zur Senkung des Wartungsaufwandes und zur Steigerung der Lagerlebensdauer ist es daher, die Wälzlager an derartigen Walzgerüsten gegen eindringende Flüssigkeiten und Verschmutzungen in geeigneter Weise abzudichten.

Ein solches abgedichtetes Wälzlager ist gattungsbildend beispielsweise durch die DE 199 35 014 A1 bekannt. Dieses, als abgedichtetes vierreihiges Kegelrollenlager für Stütz- und Arbeitswalzenlagerungen an Walzgerüsten ausgebildete Wälzlager, besteht im Wesentlichen aus einem axial mehrteiligen äußeren Lagerring und einem axial mehrteiligen inneren Lagerring sowie aus einer Anzahl zwischen den Lagerringen in vier Reihen nebeneinander auf deren Laufbahnen abrollenden Wälzkörpern, wobei die Wälzkörper jeder Reihe durch jeweils einen Lagerkäfig in Umfangsrichtung in gleichmäßigen Abständen zueinander gehaltenen werden. Der zwischen dem äußeren Lagerring und dem inneren Lagerring gebildete Lagerraum ist dabei an beiden axialen Enden gegen eindringende Flüssigkeiten und Verschmutzungen abgedichtet, indem der innere Lagerring an seinen axialen Endabschnitten gegenüber den axialen Endabschnitten des äußeren Lagerrings verlängert ausgebildet ist und auf die Verlängerungen des inneren Lagerrings jeweils an den axialen Endabschnitten des äußeren Lagerrings anliegende gesonderte Dichtungshalter mit profilierten Ringdichtungen aufgeschoben werden. Diese, zumeist als metallarmierte elastische Radialwellendichtringe ausgebildeten Ringdichtungen sind jeweils einerseits an der Innenumfangsfläche des Dichtungshalters befestigt und weisen andererseits sich zum inneren Lagerring erstreckende elastische Dichtlippen auf, die jeweils mit den axial verlängerten Endabschnitten des inneren Lagerrings in Dichtkontakt stehen und somit den zwischen dem äußeren Lagerring und dem inneren Lagerring gebildeten Lagerraum hermetisch abdichten.

Durch die DE 42 06 764 A1 ist es darüber hinaus auch bekannt, sowohl die axialen Endabschnitte des inneren Lagerrings als auch die axialen Endabschnitte des äußeren Lagerrings eines solchen vierreihigen Kegelrollenlagers verlängert auszubilden und die ebenfalls als Radialwellendichtringe ausgebildeten Ringdichtungen unter Einsparung gesonderter Dichtungshalter an den Innenumfangsflächen der Verlängerungen des äußeren Lagerrings derart zu befestigen, dass die Radialwellendichtringe mit ihren Dichtlippen auf den Zylinderflächen der Verlängerungen des inneren Lagerrings gleiten.

Aus der US 4,527,915 ist ein abgedichtetes Wälzlager bekannt, das dem Oberbegriff des Anspruchs 1 entspricht.

Nachteilig bei solchen abgedichteten Wälzlagern ist es jedoch, dass die eigens für die Abdichtung der Wälzlager vorgesehenen Verlängerungen am inneren bzw. auch am äußeren Lagerring einen erhöhten Platzbedarf für das Wälzlager erfordern bzw. dass derart abgedichtete Wälzlager gegenüber Wälzlagern ohne Abdichtung bei gleichem Platzbedarf mit geringeren Tragzahlen ausgelegt werden müssen, da die Kegelrollen des Wälzlagers und deren Laufbahnen durch die Verlängerungen entsprechend kleiner auszubilden sind. Darüber hinaus haben sich die bekannten elastischen Radialwellendichtringe zusätzlich zu deren relativ hohen Kosten noch dahingehend als nachteilig erwiesen, dass diese aufgrund des Reibkontaktes ihrer Dichtlippen zu den Zylinderflächen der Verlängerungen des inneren Lagerrings einem erhöhten Verschleiß unterliegen und somit nur für Dichtverbindungen bis zu einem bestimmten Drehzahllimit geeignet sind. Ebenso kann es bei einem Ausfall der Kühlung der Walzgerüste zu einem plötzlichen Anstieg der Temperatur innerhalb des Wälzlagers kommen, der über das für elastische Wellendichtringe bestehende Temperaturlimit hinaus geht und somit zu Beschädigungen an den Radialwellendichtringen führt, durch die deren Dichtfunktion verloren geht.

### Aufgabe der Erfindung

Ausgehend von den dargelegten Nachteilen der Lösungen des bekannten Standes der Technik liegt der Erfindung deshalb die Aufgabe zu Grunde, ein abgedichtetes Wälzlager, insbesondere ein abgedichtetes vierreihiges Kegelrollenlager für Stütz- und Arbeitswalzenlagerungen an Walzgerüsten, zu konzipieren, dessen zwischen dem äußeren Lagerring und dem inneren Lagerring gebildeter Lagerraum mit kostengünstigen und verschleißarmen Dichtungen ohne Drehzahl- und Temperaturlimit abgedichtet ist und welches bei gleichem Platzbedarf mit annähernd gleichen Tragzahlen wie ein gleichartiges Wälzlager ohne Abdichtung ausgelegt werden kann.

### Beschreibung der Erfindung

Erfindungsgemäß wird diese Aufgabe bei einem abgedichteten Wälzlager nach dem Oberbegriff des Anspruchs 1 derart gelöst, dass die den Lagerraum abdichtenden Ringdichtungen als jeweils mit der ersten bzw. mit der zweiten Käfigscheibe der beiden äußeren Lagerkäfige in Dichtverbindung stehende Lamellenringe ausgebildet sind.

Derartige Lamellenringe bestehen aus zumindest zwei nebeneinander angeordneten, voneinander unabhängigen oder doppelt gewundenen Stahlringen, die miteinander eine Spalt- oder Labyrinthdichtung bilden und sich somit durch einen guten Dichteffekt auszeichnen. Dabei unterscheidet man zwischen außenspannenden Lamellenringen, die gegen die Innenumfangswand einer Bohrung gespannt werden, innenspannenden Lamellenringen, die auf die Außenumfangswand einer Welle gespannt werden, sowie Kombinationen von außen-und innenspannenden Lamellenringen, bei denen zumindest ein Teilring gegen die Innenumfangswand einer Bohrung und ein Teilring auf die Außenumfangswand einer Welle gespannt werden. Die Teilringe dieser Lamellenringe stehen dabei immer mit einer Ringnut am jeweils gegenüberliegenden Teil in Dichtkontakt und weisen sowohl zueinander als auch zu der Ringnut ein geringfügiges radiales und axiales Spiel auf, durch welches hemmende Reibungen zwischen den Teilringen bzw. zwischen den Lamellenringen und der Ringnut vermieden werden und somit eine berührungslose Dichtung erzielt wird.

In zweckmäßiger Weiterbildung des erfindungsgemäß ausgebildeten, abgedichteten Wälzlagers ist deshalb in die eben ausgebildeten Außenumfangsflächen der ersten und der zweiten Käfigscheiben der beiden äußeren Lagerkäfige jeweils eine umlaufende Ringnut eingearbeitet, die jeweils mit einem auf die gegenüberliegende ebenen Innenmantelfläche des äußeren Lagerrings aufgespannten und in die Ringnut hineinragenden, doppelt gewundenen Lamellenring in Dichtkontakt steht. Dadurch wird zunächst der zwischen den Außenumfangsflächen der jeweils äußeren Käfigscheiben der äußeren Bolzenkäfige und der Innenmantelfläche des äußeren Lagerrings bestehende Spalt an beiden Axialseiten des Wälzlagers in vorteilhafter Weise abgedichtet, wobei es alternativ dazu auch möglich wäre, die umlaufenden Ringnuten jeweils in die Innenmantelfläche des äußeren Lagerrings einzuarbeiten und die Lamellenringe jeweils in diese Ringnuten hineinragend auf die eben ausgebildeten Außenumfangsflächen der ersten und der zweiten Käfigscheiben der beiden äußeren Lagerkäfige zu spannen. Ebenso ist je nach vorhandenem Platzangebot anstelle der doppelt gewundenen Lamellenringe auch die Verwendung anderer geeigneter Lamellenringe der zuvor beschriebenen Art möglich.

Zur vollständigen Abdichtung des zwischen dem äußeren und dem inneren Lagerring gebildeten Lagerraumes ist es dementsprechend ein weiteres Merkmal des erfindungsgemäß ausgebildeten, abgedichteten Wälzlagers, dass in die neben den äußeren Laufbahnen der Wälzkörper eben ausgebildete Außenmantelfläche des inneren Lagerrings ebenfalls jeweils eine umlaufende Ringnut eingearbeitet ist, die jeweils mit einem weiteren auf die ebenen Innenumfangsflächen der ersten und der zweiten Käfigscheiben der beiden äußeren Lagerkäfige gespannten und in die Ringnut hineinragenden, doppelt gewundenen Lamellenring in Dichtkontakt steht. Somit wird schließlich auch der zwischen den Innenumfangsflächen der jeweils äußeren Käfigscheiben der äußeren Bolzenkäfige und der Außenmantelfläche des inneren Lagerrings bestehende Spalt an beiden Axialseiten des Wälzlagers in vorteilhafter Weise abgedichtet, so dass der zwischen dem äußeren Lagerring und dem inneren Lagerring gebildete Lagerraum insgesamt hermetisch gegen eindringende Flüssigkeiten und Verschmutzungen abgedichtet ist. Auch hier ist es natürlich möglich, in äquivalenter Weise die umlaufenden Ringnuten jeweils in die eben ausgebildeten Innenumfangsflächen der ersten und der zweiten Käfigscheiben der beiden äußeren Lagerkäfige einzuarbeiten und die Lamellenringe jeweils in diese Ringnuten hineinragend auf die eben ausgebildete Außenmantelfläche des inneren Lagerrings zu spannen und/oder andere geeignete Lamellenringe zu verwenden.

Das erfindungsgemäß ausgebildete Wälzlager weist somit gegenüber den aus dem Stand der Technik bekannten abgedichteten Wälzlagern den Vorteil auf, dass durch die Integrierung der Abdichtung des zwischen dem äußeren und dem inneren Lagering gebildeten Lagerraumes in die vorhandenen Käfigscheiben eines als Bolzenkäfig ausgebildeten Lagerkäfigs keine den Platzbedarf für das Wälzlager erhöhenden Verlängerungen am inneren bzw. auch am äußeren Lagerring mehr erforderlich sind, so dass derart abgedichtete Wälzlager gegenüber Wälzlagern ohne Abdichtung mit identisch dimensionierten Kegelrollen und Laufbahnen und somit mit den gleichen Tragzahlen ausgelegt werden können. Die Verwendung von Lamellenringen als Ringdichtungen ermöglicht es darüber hinaus, eine derartige Abdichtung ohne Drehzahllimit zu verwenden, da die Lamellenringe aufgrund ihrer berührungslosen Abdichtung keinerlei Reibkontakte zueinander oder zu den gegenüberliegenden Ringnuten aufweisen und somit keinem Verschleiß mehr unterliegen. Da derartige Lamellenringe außerdem ausschließlich aus Stahlwerkstoffen bestehen, kann auch ein Ausfall der Kühlung der Walzgerüste und ein plötzlicher Anstieg der Temperatur innerhalb des Wälzlagers nicht mehr zu Beschädigungen führen, durch die deren Dichtfunktion verloren geht, so dass für den Einsatz eines erfindungsgemäß abgedichteten Wälzlagers auch kein Temperaturlimit mehr besteht.

### Kurze Beschreibung der Zeichnungen

Eine bevorzugte Ausführungsform des erfindungsgemäß ausgebildeten abgedichteten Wälzlagers wird nachfolgend unter Bezugnahme auf die beigefügten Zeichnungen näher erläutert. Dabei zeigen:
- Figur 1: die obere Symmetriehälfte eines Querschnittes durch ein erfindungsgemäß ausgebildetes abgedichtetes vierreihiges Kegelrollenlager;
- Figur 2: eine vergrößerte Darstellung des äußeren Abschnittes des in Figur 1 dargestellten Querschnittes durch ein erfindungsgemäß ausgebildetes abgedichtetes vierreihiges Kegelrollenlager.

### Ausführliche Beschreibung der Zeichnungen

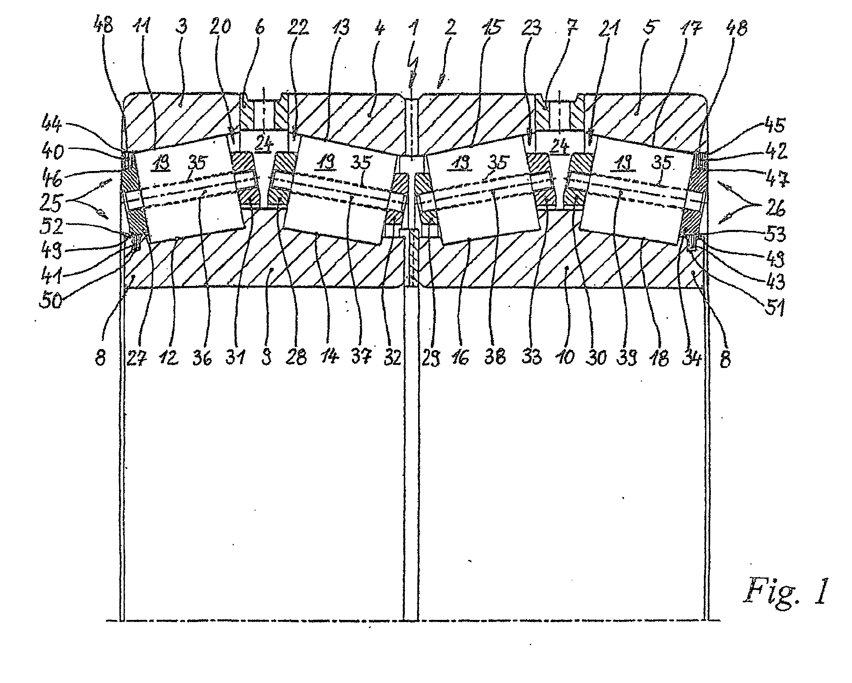

Aus Figur 1 geht deutlich ein als vierreihiges Kegelrollenlager für Stütz- und Arbeitswalzenlagerungen an Walzgerüsten ausgebildetes Wälzlager 1 hervor, welches im Wesentlichen aus einem axial mehrteiligen äußeren Lagerring 2 und einem axial mehrteiligen inneren Lagerring 8 sowie aus einer Anzahl zwischen den Lagerringen 2, 8 in vier Reihen nebeneinander auf deren Laufbahnen 11, 12, 13, 14, 15, 16, 17, 18 abrollenden Wälzkörpern 19 besteht. Der äußere Lagerring 2 wird dabei deutlich sichtbar durch einen linken und einen rechten, einreihigen Laufring 3, 5 gebildet, die über zwei Zwischenringe 6, 7 an einem mittleren zweireihigen Laufring 4 anliegen, während der innere Lagerring 8 aus einem linken und einem rechten zweireihigen Laufring 9, 10 besteht, die axial hintereinander angeordnet sind. Desweiteren ist in Figur 1 zu sehen, dass die Wälzkörper 19 jeder Reihe durch jeweils einen Lagerkäfig 20, 21, 22, 23 in Umfangsrichtung in gleichmäßigen Abständen zueinander gehaltenen werden und dass der zwischen dem äußeren Lagerring 2 und dem inneren Lagerring 8 gebildete Lagerraum 24 an beiden axialen Enden durch Ringdichtungen 25, 26 gegen eindringende Flüssigkeiten und Verschmutzungen abgedichtet ist.

Ebenfalls durch Figur 1 wird schließlich auch deutlich, dass jeder Lagerkäfig 20, 21, 22, 23 des Wälzlagers 1 als ansich bekannter Bolzenkäfig ausgebildet ist, der jeweils aus einer ersten Käfigscheibe 27, 28, 29, 30 und aus einer zweiten Käfigscheibe 31, 32, 33, 34 sowie aus einer Vielzahl mit beiden Käfigscheiben 27, 28, 29, 30, 31, 32, 33, 34 verbundenen Bolzen 36, 37, 38, 39 besteht, die jeweils einen mit einer zentrischen Axialbohrung 35 ausgebildeten Wälzkörper 19 führen. Diese als Bolzenkäfige ausgebildeten Lagerkäfige 20, 21, 22, 23 sind erfindungsgemäß in die Abdichtung des zwischen dem äußeren Lagerring 2 und dem inneren Lagerring 8 gebildeten Lagerraum 24 integriert, indem die den Lagerraum 24 abdichtenden Ringdichtungen 25, 26 als jeweils mit der ersten bzw. mit der zweiten Käfigscheibe 27, 34 der beiden äußeren Lagerkäfige 20, 21 in Dichtverbindung stehende Lamellenringe 40, 41, 42, 43 ausgebildet sind.

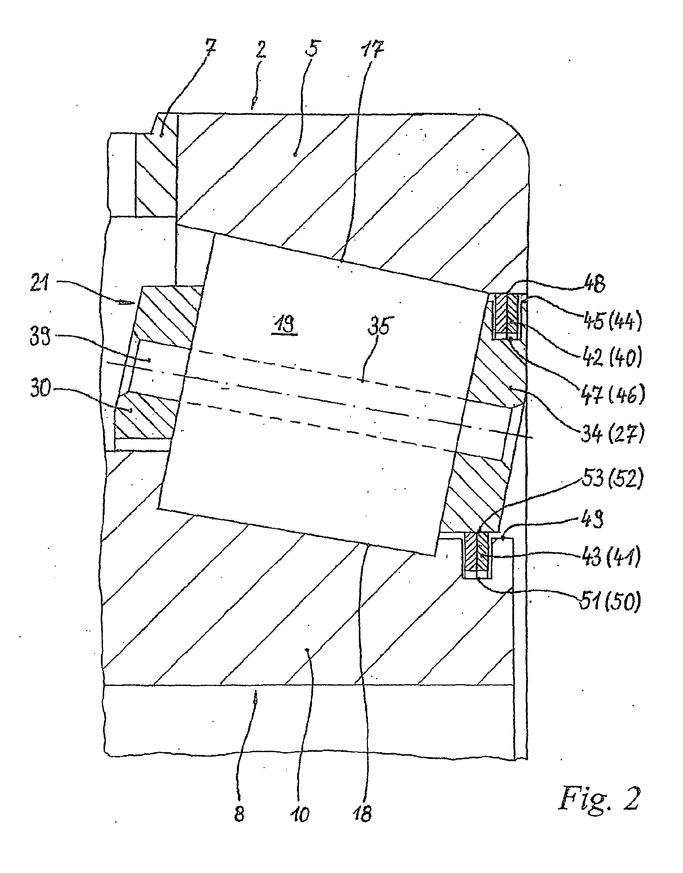

Die vergrößerte Darstellung des rechten äußeren Abschnittes des in Figur 1 dargestellten Querschnittes durch das erfindungsgemäß ausgebildete Wälzlager 1 in Figur 2, in welcher die bedeutungsgleichen Bezugszahlen des linken äußeren Abschnittes des erfindungsgemäß ausgebildeten Wälzlagers 1 in Klammern angegeben sind, zeigt dabei, dass in die eben ausgebildeten Außenumfangsflächen 44, 45 der ersten und der zweiten Käfigscheiben 27, 34 der beiden äußeren Lagerkäfige 20, 21 jeweils eine umlaufende Ringnut 46, 47 eingearbeitet ist. Diese Ringnut 46 steht jeweils mit einem auf die gegenüberliegende ebenen Innenmantelfläche 48 des äußeren Lagerrings 2 gespannten und in die Ringnut 46, 47 hineinragenden, doppelt gewundenen Lamellenring 40, 42 in Dichtkontakt, so dass der zwischen den Außenumfangsflächen 44, 45 der äußeren Käfigscheiben 27, 34 der Bolzenkäfige 20, 21 und der Innenmantelfläche 48 des äußeren Lagerrings 2 bestehende Spalt an beiden Axialseiten des Wälzlagers 1 abgedichtet ist.

Darüber hinaus wird aus Figur 2 deutlich, dass in die neben den äußeren Laufbahnen 12, 18 der Wälzkörper 19 eben ausgebildete Außenmantelfläche 49 des inneren Lagerrings 8 ebenfalls jeweils eine umlaufende Ringnut 50, 51 eingearbeitet ist, die jeweils mit einem weiteren auf die ebenen Innenumfangsflächen 52, 53 der ersten und der zweiten Käfigscheiben 27, 34 der beiden äußeren Bolzenkäfige 20, 21 gespannten und in die Ringnut 50, 51 hineinragenden, doppelt gewundenen Lamellenring 41, 43 in Dichtkontakt steht. Durch diese Lamellenringe 41, 43 wird schließlich auch der zwischen den Innenumfangsflächen 52, 53 der äußeren Käfigscheiben der äußeren Bolzenkäfige 20, 21 und der Außenmantelfläche 49 des inneren Lagerrings 8 bestehende Spalt an beiden Axialseiten des Wälzlagers 1 abgedichtet, so dass der zwischen dem äußeren Lagerring 2 und dem inneren Lagerring 8 gebildete Lagerraum 24 insgesamt hermetisch gegen eindringende Flüssigkeiten und Verschmutzungen abgedichtet ist.

### Bezugszahlenliste

- 1: Wälzlager
- 2: äußerer Lagerring
- 3: linker Laufring
- 4: mittlerer Laufring
- 5: rechter Laufring
- 6: Zwischenring
- 7: Zwischenring
- 8: innerer Lagerring
- 9: linker Laufring
- 10: rechter Laufring
- 11: Laufbahn
- 12: Laufbahn
- 13: Laufbahn
- 14: Laufbahn
- 15: Laufbahn
- 16: Laufbahn
- 17: Laufbahn
- 18: Laufbahn
- 19: Wälzkörper
- 20: äußerer Lagerkäfig
- 21: äußerer Lagerkäfig
- 22: innerer Lagerkäfig
- 23: innerer Lagerkäfig
- 24: Lagerraum
- 25: Ringdichtung
- 26: Ringdichtung
- 27: erste Käfigscheibe
- 28: erste Käfigscheibe
- 29: erste Käfigscheibe
- 30: erste Käfigscheibe
- 31: zweite Käfigscheibe
- 32: zweite Käfigscheibe
- 33: zweite Käfigscheibe
- 34: zweite Käfigscheibe
- 35: Axialbohrung
- 36: Bolzen
- 37: Bolzen
- 38: Bolzen
- 39: Bolzen
- 40: Lamellenring
- 41: Lamellenring
- 42: Lamellenring
- 43: Lamellenring
- 44: Außenumfangsfläche
- 45: Außenumfangsfläche
- 46: Ringnut
- 47: Ringnut
- 48: Innenmantelfläche
- 49: Außenmantelfläche
- 50: Ringnut
- 51: Ringnut
- 52: Innenumfangsfläche
- 53: Innenumfangsfläche

## Patentansprüche

1. Abgedichtetes Wälzlager, insbesondere abgedichtetes vierreihiges Kegelrollenlager für Stütz- und Arbeitswalzenlagerungen an Walzgerüsten, welches Wälzlager (1) im Wesentlichen aus einem axial mehrteiligen äußeren Lagerring (2) und einem axial mehrteiligen inneren Lagerring (8) sowie aus einer Anzahl zwischen den Lagerringen (2, 8) in vier Reihen nebeneinander auf deren Laufbahnen (11, 12, 13, 14, 15, 16, 17, 18) abrollenden Wälzkörpern (19) besteht, wobei die Wälzkörper (19) jeder Reihe durch jeweils einen Lagerkäfig (20, 21, 22, 23) in Umfangsrichtung in gleichmäßigen Abständen zueinander gehaltenen werden und der zwischen dem äußeren Lagerring (2) und dem inneren Lagerring (8) gebildete Lagerraum (24) an beiden axialen Enden durch Ringdichtungen (25, 26) gegen eindringende Flüssigkeiten und Verschmutzungen abgedichtet ist, wobei jeder Lagerkäfig (20, 21, 22, 23) des Wälzlagers (1) als Bolzenkäfig ausgebildet ist, der jeweils aus einer ersten Käfigscheibe (27, 28, 29, 30), einer zweiten Käfigscheibe (31, 32, 33, 34) und einer Vielzahl mit beiden Käfigscheiben (27, 28, 29, 30, 31, 32, 33, 34) verbundenen sowie jeweils einen Wälzkörper (19) mit einer zentrischen Axialbohrung (35) führenden Bolzen (36, 37, 38, 39) besteht, **dadurch gekennzeichnet, dass** die den Lagerraum (24) abdichtenden Ringdichtungen (25, 26) als jeweils mit der ersten bzw. mit der zweiten Käfigscheibe (27, 34) der beiden äußeren Lagerkäfige (20, 21) in Dichtverbindung stehende Lamellenringe (40, 41, 42, 43) ausgebildet sind.

2. Abgedichtetes Wälzlager nach Anspruch 1, **dadurch gekennzeichnet, dass** in die eben ausgebildeten Außenumfangsflächen (44, 45) der ersten und der zweiten Käfigscheiben (27, 34) der beiden äußeren Lagerkäfige (20, 21) jeweils eine umlaufende Ringnut (46, 47) eingearbeitet ist, die jeweils mit einem auf die gegenüberliegende ebenen Innenmantelfläche (48) des äußeren Lagerrings (2) gespannten und in die Ringnut (46, 47) hineinragenden, doppelt gewundenen Lamellenring (40, 42) in Dichtkontakt steht.

3. Abgedichtetes Wälzlager nach Anspruch 1, **dadurch gekennzeichnet, dass** in die neben den äußeren Laufbahnen (12, 18) der Wälzkörper (19) eben ausgebildete Außenmantelfläche (49) des inneren Lagerrings (8) jeweils eine umlaufende Ringnut (50, 51) eingearbeitet ist, die jeweils mit einem weiteren auf die ebenen Innenumfangsflächen (52, 53) der ersten und der zweiten Käfigscheiben (27, 34) der beiden äußeren Lagerkäfige (20, 21) gespannten und in die Ringnut (50, 51) hineinragenden, doppelt gewundenen Lamellenring (41, 43) in Dichtkontakt steht.

## Claims

1. Sealed rolling bearing, in particular sealed four-row tapered roller bearing for support roll and working roll bearing arrangements on roll stands, said rolling bearing (1) being substantially composed of an axially multi-part outer bearing ring (2) and an axially multi-part inner bearing ring (8) and of a number of rolling bodies (19) which roll adjacent to one another in four rows between the bearing rings (2, 8) on the raceways (11, 12, 13, 14, 15, 16, 17, 18) thereof, the rolling bodies (19) of each row being held with uniform spacing relative to one another in the peripheral direction by means of in each case one bearing cage (20, 21, 22, 23), and the bearing space (24) formed between the outer bearing ring (2) and the inner bearing ring (8) being sealed off with respect to intruding fluids and dirt at both axial ends by means of ring seals (25, 26), each bearing cage (20, 21, 22, 23) of the rolling bearing (1) being embodied as a pin cage which is in each case composed of a first cage disk (27, 28, 29, 30), a second cage disk (31, 32, 33, 34) and a multiplicity of pins (36, 37, 38, 39) which are connected to the two cage disks (27, 28, 29, 30, 31, 32, 33, 34) and guide in each case one rolling body (19) with a central axial bore (35), **characterized in that** the ring seals (25, 26) which seal off the bearing space (24) are embodied as lamellar rings (40, 41, 42, 43) which are sealingly connected respectively to the first and second cage disks (27, 34) of the two outer bearing cages (20, 21).

2. Sealed rolling bearing according to claim 1, **characterized in that** in each case one peripheral annular groove (46, 47) is formed in the smooth outer peripheral faces (44, 45) of the first and second cage disks (27, 34) of the two outer bearing cages (20, 21), said peripheral annular grooves (46, 47) in each case being in sealing contact with a double-wound lamellar ring (40, 42) which is clamped against the opposite smooth inner lateral surface (48) of the outer bearing ring (2) and projects into the annular groove (46, 47).

3. Sealed rolling bearing according to claim 1, **characterized in that** in each case one peripheral annular groove (50, 51) is formed in the smooth outer lateral surface (49) of the inner bearing ring (8) adjacent to the outer raceways (12, 18) of the rolling bodies (19), said peripheral annular grooves (50, 51) in each case being in sealing contact with a further double-wound lamellar ring (41, 43) which is clamped against the smooth inner peripheral faces (52, 53) of the first and second cage disks (27, 34) of the two outer bearing cages (20, 21) and projects into the annular groove (50, 51).

## Revendications

1. Roulement à cylindres étanche, notamment palier à rouleaux cloniques à quatre rangées étanche pour supports de cylindre de travail et d'appui sur des cages de laminoir, ledit roulement à cylindres (1) se composant pour l'essentiel d'une bague de roulement (2) en plusieurs parties extérieure dans le plan axial et d'une bague de roulement (8) en plusieurs parties intérieure dans le plan axial ainsi que d'une pluralité de corps de cylindre (19) roulant dans quatre rangées côte à côte sur leurs voies de roulement (11, 12, 13, 14, 15, 16, 17, 18) entre les bagues de roulement (2, 8), les corps de cylindre (19) de chaque rangée étant respectivement maintenus à des écarts réguliers les uns par rapport aux autres dans la direction périphérique par une cage de roulement (20, 21, 22, 23) et l'espace de roulement (24) formé entre la bague de roulement (2) extérieure et la bague de roulement (8) intérieure étant rendu étanche par des joints annulaires (25, 26) pour empêcher toute pénétration de liquides et de poussières au niveau des deux extrémités axiales, chaque cage de roulement (20, 21, 22, 23) du roulement à cylindres (1) prenant la forme d'une cage à boulons composée respectivement d'un premier disque de cage (27, 28, 29, 30), d'un second disque de cage (31, 32, 33, 34) et d'une pluralité de boulons (36, 37, 38, 39) reliés aux deux disques de cage (27, 28, 29, 30, 31, 32, 33, 34) et guidant respectivement un corps de cylindre (19) doté d'un alésage axial (35) central,
**caractérisé en ce que** les joints annulaires (25, 26) rendant étanche l'espace de roulement (24) prennent la forme respectivement de bagues à lamelles (40, 41, 42, 43) en relation étanche avec le premier et/ou le second disque de cage (27, 34) des deux cages de roulement (20, 21) extérieures.

2. Roulement à cylindres étanche selon la revendication 1, **caractérisé en ce qu'**une rainure annulaire (46, 47) circonférentielle est réalisée dans les surfaces périphériques extérieures (44, 45) formées de façon plane des premier et second disques de cage (27, 34) des deux cages de roulement (20, 21) extérieures, ladite rainure étant respectivement en contact étanche avec une bague à lamelles (40, 42) serrée sur la surface d'enveloppe intérieure (48) plane opposée de la bague de roulement (2) extérieure, enroulée en double et saillant dans la rainure annulaire (46, 47).

3. Roulement à cylindres étanche selon la revendication 1, **caractérisé en ce que** respectivement une rainure annulaire (50, 51) circonférentielle est réalisée dans la surface d'enveloppe extérieure (49) de la bague de roulement (8) intérieure formée à côté des voies de roulement (12, 18) extérieures des corps de cylindre (19), ladite rainure étant respectivement en contact étanche avec une autre bague à lamelles (41, 43) serrée sur les surfaces périphériques intérieures (52, 53) planes des premier et second disques de cage (27, 34) des deux cages de roulement (20, 21) extérieures, enroulée en double et saillant dans la rainure annulaire (50, 51).
